# EUROPEAN PATENT APPLICATION

(11) **EP 4 436 145 A1**
(43) Date of publication of application: **25.09.2024**
(21) Application number: 22913671.8
(22) Date of filing: 17.10.2022
(51) Int. Cl.: H04L 69/16

(54) **DATA TRANSMISSION METHOD, COMMUNICATION APPARATUS, AND COMMUNICATION SYSTEM**

(30) Priority: 31.12.2021 CN 202111667895
(71) Applicant: Huawei Technologies Co., Ltd., Shenzhen, Guangdong 518129 (CN)
(72) Inventor: ZHAO, Juan, Shenzhen, Guangdong 518129 (CN); WU, Suwen, Shenzhen, Guangdong 518129 (CN); WANG, Haiyang, Shenzhen, Guangdong 518129 (CN)
(74) Representative: Pfenning, Meinig & Partner mbB
(86) International application number: PCT/CN2022/125690
(87) International publication number: WO 2023/124407

(57) **Abstract**

Embodiments of this application provide a data transmission method, a communication apparatus, and a communication system. The method includes: A baseband unit determines, from a first data stream of a first user, first data mapped to a first time unit, where a quantity of symbols included in the first time unit is less than a quantity of symbols included in one slot, and the first data is a part of data in the first data stream; and the baseband unit sends the first data to a radio frequency unit in a time window corresponding to the first time unit. In this solution, when the baseband unit sends user data to the radio frequency unit, a data stream of a user is divided in time domain based on a time unit granularity, and a data volume of a single time unit granularity obtained through division is sent each time, so that a data volume sent at a single time is reduced. When a bit error or a data loss occurs in data sent at a single time, the method can reduce a retransmitted data volume, and improve data transmission efficiency.

## Description

This application claims priority to Chinese Patent Application No. 202111667895.0, filed with the China National Intellectual Property Administration on December 31, 2021 and entitled "DATA TRANSMISSION METHOD, COMMUNICATION APPARATUS, AND COMMUNICATION SYSTEM", which is incorporated herein by reference in its entirety.

### TECHNICAL FIELD

Embodiments of this application relate to the field of communication technologies, and in particular, to a data transmission method, a communication apparatus, and a communication system.

### BACKGROUND

A baseband unit obtains user data, and sends the user data to a radio frequency unit through an interface between the baseband unit and the radio frequency unit. After the radio frequency unit performs corresponding processing on the user data, an antenna sends the processed user data to a terminal.

After the baseband unit sends data to the radio frequency unit, if finding that a bit error or a data loss occurs in the data, the radio frequency unit notifies the baseband unit to retransmit the data.

How to reduce a retransmitted data volume, to implement efficient transmission of user data between the baseband unit and the radio frequency unit needs to be resolved.

### SUMMARY

Embodiments of this application provide a data transmission method, a communication apparatus, and a communication system, to implement efficient transmission of user data between a baseband unit and a radio frequency unit.

According to a first aspect, an embodiment of this application provides a data transmission method. The method may be performed by a baseband unit or a module (such as a chip) used in the baseband unit. The method includes: The baseband unit determines, from a first data stream of a first user, first data mapped to a first time unit, where a quantity of symbols included in the first time unit is less than a quantity of symbols included in one slot, and the first data is a part of data in the first data stream; and the baseband unit sends the first data to a radio frequency unit in a time window corresponding to the first time unit.

According to the foregoing solution, when the baseband unit sends user data to the radio frequency unit, a data stream of a user is divided in time domain based on a time unit granularity, and a data volume of a single time unit granularity obtained through division is sent each time, so that a data volume sent at a single time is reduced. When a bit error or a data loss occurs in data sent at a single time, the method can reduce a retransmitted data volume, and improve data transmission efficiency.

In a possible implementation, the baseband unit determines location information of the first data in the first data stream based on a modulation scheme of the first data stream and a quantity of resource elements occupied by the first data stream in the first time unit; and the baseband unit determines the first data from the first data stream based on the location information.

According to the foregoing solution, the baseband unit can accurately determine data that is in the first data stream and is mapped to the first time unit, so that user data can be accurately divided based on the time unit granularity, and this helps ensure correctness of data transmission.

In a possible implementation, the baseband unit determines the time window corresponding to the first time unit.

In a possible implementation, the baseband unit determines the time window based on the first time unit, a delay of processing the first data by the radio frequency unit, and a transmission delay of the first data between the baseband unit and the radio frequency unit.

According to the foregoing solution, the baseband unit can accurately determine a time window corresponding to each time unit, to correctly transmit the user data in the time window.

In a possible implementation, the baseband unit sends the first data to the radio frequency unit in the time window corresponding to the first time unit through an enhanced common public radio interface (enhanced common public radio interface, eCPRI) between the baseband unit and the radio frequency unit.

In a possible implementation, the first data stream is a scrambled bit data stream or a modulated data stream.

In a possible implementation, the baseband unit determines, from the first data stream, second data mapped to a second time unit, where the first time unit is earlier than the second time unit, a quantity of symbols included in the second time unit is less than the quantity of symbols included in one slot, and the first data and the second data are data at different locations in the first data stream; and the baseband unit sends the second data to the radio frequency unit in a time window corresponding to the second time unit.

In a possible implementation, the baseband unit determines, from a second data stream of a second user, third data mapped to the first time unit, where the third data is a part of data in the second data stream; and the baseband unit sends a data packet to the radio frequency unit in the time window corresponding to the first time unit, where the data packet includes the first data and the third data.

According to the foregoing solution, the baseband unit may transmit data of a plurality of users in a same time unit, to be specific, the baseband unit may map a part of data in data streams of different users to the time unit, and send, in the time unit, the data mapped to the time unit. In one aspect, the radio frequency unit does not need to transmit data of a next user after transmission of all data in a single data stream of a user is completed. Therefore, a case in which data of another user cannot be transmitted for long time due to a large data transmission volume of a user can be avoided, thereby improving user experience. In another aspect, because the baseband unit divides the data stream of the user in time domain based on the time unit granularity, and sends a data volume of one time unit granularity each time, a data volume sent at a single time is reduced. Therefore, when a bit error or a data loss occurs in data sent at a single time, the method can reduce a retransmitted data volume, and improve data transmission efficiency.

In a possible implementation, the data packet further includes location information of the first data in the data packet and location information of the third data in the data packet.

According to the foregoing solution, the radio frequency unit can accurately obtain data of the first user and data of the second user in the data packet, and this helps implement correct transmission and processing of the user data.

In a possible implementation, the baseband unit sends a control information packet to the radio frequency unit, where the control information packet includes the location information of the first data in the data packet and the location information of the third data in the data packet.

According to the foregoing solution, the radio frequency unit can accurately obtain data of the first user and data of the second user in the data packet, and this helps implement correct transmission and processing of the user data.

In a possible implementation, the first data is data of a frequency division multiplexing type or data of a code division multiplexing type.

In a possible implementation, the second data is data of a frequency division multiplexing type or data of a code division multiplexing type.

In a possible implementation, the third data is data of a frequency division multiplexing type or data of a code division multiplexing type.

In a possible implementation, the first time unit is a symbol or a mini-slot.

According to a second aspect, an embodiment of this application provides a data transmission method. The method may be performed by a radio frequency unit or a module (such as a chip) used in the radio frequency unit. The method includes: The radio frequency unit receives first data from a baseband unit, where the first data is a part of data in a first data stream of a first user, the first data is mapped to a first time unit, and a quantity of symbols included in the first time unit is less than a quantity of symbols included in one slot; and the radio frequency unit processes the first data in a time period corresponding to the first time unit.

According to the foregoing solution, when the baseband unit sends user data to the radio frequency unit, a data stream of a user is divided in time domain based on a time unit granularity, and a data volume of a single time unit granularity obtained through division is sent each time, so that a data volume sent at a single time is reduced. When a bit error or a data loss occurs in data sent at a single time, the method can reduce a retransmitted data volume, and improve data transmission efficiency.

In a possible implementation, the radio frequency unit receives second data from the baseband unit, where the first data and the second data are data at different locations in the first data stream, the second data is mapped to a second time unit, the first time unit is earlier than the second time unit, and a quantity of symbols included in the second time unit is less than the quantity of symbols included in one slot; and the radio frequency unit processes the second data in a time period corresponding to the second time unit.

In a possible implementation, the radio frequency unit receives a data packet from the baseband unit, where the data packet includes the first data and third data. The third data is a part of data in a second data stream of a second user, and the third data is mapped to the first time unit. According to the foregoing solution, the baseband unit may transmit data of a plurality of users in a same time unit, to be specific, the baseband unit may map a part of data in data streams of different users to the time unit, and send, in the time unit, the data mapped to the time unit. In one aspect, the radio frequency unit does not need to transmit data of a next user after transmission of all data in a single data stream of a user is completed. Therefore, a case in which data of another user cannot be transmitted for long time due to a large data transmission volume of a user can be avoided, thereby improving user experience. In another aspect, because the baseband unit divides the data stream of the user in time domain based on the time unit granularity, and sends a data volume of one time unit granularity each time, a data volume sent at a single time is reduced. Therefore, when a bit error or a data loss occurs in data sent at a single time, the method can reduce a retransmitted data volume, and improve data transmission efficiency.

In a possible implementation, the data packet further includes location information of the first data in the data packet and location information of the third data in the data packet.

According to the foregoing solution, the radio frequency unit can accurately obtain data of the first user and data of the second user in the data packet, and this helps implement correct transmission and processing of the user data.

In a possible implementation, the radio frequency unit receives a control information packet from the baseband unit, where the control information packet includes the location information of the first data in the data packet and the location information of the third data in the data packet.

According to the foregoing solution, the radio frequency unit can accurately obtain data of the first user and data of the second user in the data packet, and this helps implement correct transmission and processing of the user data.

In a possible implementation, the radio frequency unit obtains the first data from the data packet based on the location information of the first data in the data packet; and the radio frequency unit obtains the third data from the data packet based on the location information of the third data in the data packet.

In a possible implementation, the first data is data of a frequency division multiplexing type or data of a code division multiplexing type.

In a possible implementation, the second data is data of a frequency division multiplexing type or data of a code division multiplexing type.

In a possible implementation, the third data is data of a frequency division multiplexing type or data of a code division multiplexing type.

In a possible implementation, the radio frequency unit receives the first data from the baseband unit through an eCPRI between the baseband unit and the radio frequency unit.

In a possible implementation, the first data stream is a scrambled bit data stream. The radio frequency unit performs modulation, layer mapping, precoding, and resource element mapping on the first data in the time period corresponding to the first time unit.

In a possible implementation, the first data stream is a modulated data stream. The radio frequency unit performs layer mapping, precoding, and resource element mapping on the first data in the time period corresponding to the first time unit; or the radio frequency unit performs precoding and resource element mapping on the first data in the time period corresponding to the first time unit; or the radio frequency unit performs resource element mapping on the first data in the time period corresponding to the first time unit.

In a possible implementation, the first time unit is a symbol or a mini-slot.

According to a third aspect, an embodiment of this application provides a data transmission method. The method includes: A baseband unit determines, from a first data stream of a first user, first data mapped to a first time unit, where the first data is a part of data in the first data stream, and a quantity of symbols included in the first time unit is less than a quantity of symbols included in one slot; the baseband unit sends the first data to a radio frequency unit in a time window corresponding to the first time unit; and the radio frequency unit processes the first data in a time period corresponding to the first time unit.

According to the foregoing solution, when the baseband unit sends user data to the radio frequency unit, a data stream of a user is divided in time domain based on a time unit granularity, and a data volume of a single time unit granularity obtained through division is sent each time, so that a data volume sent at a single time is reduced. When a bit error or a data loss occurs in data sent at a single time, the method can reduce a retransmitted data volume, and improve data transmission efficiency.

In a possible implementation, the baseband unit determines location information of the first data in the first data stream based on a modulation scheme of the first data stream and a quantity of resource elements occupied by the first data stream in the first time unit; and the baseband unit determines the first data from the first data stream based on the location information.

According to the foregoing solution, the baseband unit can accurately determine data that is in the first data stream and is mapped to the first time unit, so that user data can be accurately divided based on the time unit granularity, and this helps ensure correctness of data transmission.

In a possible implementation, the baseband unit determines the time window corresponding to the first time unit.

In a possible implementation, the baseband unit determines the time window based on the first time unit, a delay of processing the first data by the radio frequency unit, and a transmission delay of the first data between the baseband unit and the radio frequency unit.

According to the foregoing solution, the baseband unit can accurately determine a time window corresponding to each time unit, to correctly transmit the user data in the time window.

In a possible implementation, the baseband unit sends the first data to the radio frequency unit in the time window corresponding to the first time unit through an eCPRI between the baseband unit and the radio frequency unit.

In a possible implementation, the first data stream is a scrambled bit data stream. The radio frequency unit performs modulation, layer mapping, precoding, and resource element mapping on the first data in the time period corresponding to the first time unit.

In a possible implementation, the first data stream is a modulated data stream. The radio frequency unit performs layer mapping, precoding, and resource element mapping on the first data in the time period corresponding to the first time unit; or the radio frequency unit performs precoding and resource element mapping on the first data in the time period corresponding to the first time unit; or the radio frequency unit performs resource element mapping on the first data in the time period corresponding to the first time unit.

In a possible implementation, the baseband unit determines, from the first data stream, second data mapped to a second time unit, where the first time unit is earlier than the second time unit, a quantity of symbols included in the second time unit is less than the quantity of symbols included in one slot, and the first data and the second data are data at different locations in the first data stream; the baseband unit sends the second data to the radio frequency unit in a time window corresponding to the second time unit; and the radio frequency unit processes the second data in a time period corresponding to the second time unit.

In a possible implementation, the baseband unit determines, from a second data stream of a second user, third data mapped to the first time unit, where the third data is a part of data in the second data stream; and the baseband unit sends a data packet to the radio frequency unit in the time window corresponding to the first time unit, where the data packet includes the first data and the third data.

According to the foregoing solution, the baseband unit may transmit data of a plurality of users in a same time unit, to be specific, the baseband unit may map a part of data in data streams of different users to the time unit, and send, in the time unit, the data mapped to the time unit. In one aspect, the radio frequency unit does not need to transmit data of a next user after transmission of all data in a single data stream of a user is completed. Therefore, a case in which data of another user cannot be transmitted for long time due to a large data transmission volume of a user can be avoided, thereby improving user experience. In another aspect, because the baseband unit divides the data stream of the user in time domain based on the time unit granularity, and sends a data volume of one time unit granularity each time, a data volume sent at a single time is reduced. Therefore, when a bit error or a data loss occurs in data sent at a single time, the method can reduce a retransmitted data volume, and improve data transmission efficiency.

In a possible implementation, the data packet further includes location information of the first data in the data packet and location information of the third data in the data packet.

According to the foregoing solution, the radio frequency unit can accurately obtain data of the first user and data of the second user in the data packet, and this helps implement correct transmission and processing of the user data.

In a possible implementation, the baseband unit sends a control information packet to the radio frequency unit, where the control information packet includes the location information of the first data in the data packet and the location information of the third data in the data packet.

In a possible implementation, the radio frequency unit obtains the first data from the data packet based on the location information of the first data in the data packet; and the radio frequency unit obtains the third data from the data packet based on the location information of the third data in the data packet.

According to the foregoing solution, the radio frequency unit can accurately obtain data of the first user and data of the second user in the data packet, and this helps implement correct transmission and processing of the user data.

In a possible implementation, the first data is data of a frequency division multiplexing type or data of a code division multiplexing type.

In a possible implementation, the second data is data of a frequency division multiplexing type or data of a code division multiplexing type.

In a possible implementation, the third data is data of a frequency division multiplexing type or data of a code division multiplexing type.

In a possible implementation, the first time unit is a symbol or a mini-slot.

According to a fourth aspect, an embodiment of this application provides a communication apparatus. The apparatus may be a baseband unit or a module (such as a chip) used in the baseband unit. The apparatus has a function of implementing any implementation of the first aspect. The function may be implemented by using hardware, or may be implemented by executing corresponding software by hardware. The hardware or the software includes one or more modules corresponding to the foregoing function.

According to a fifth aspect, an embodiment of this application provides a communication apparatus. The apparatus may be a radio frequency unit or a module (such as a chip) used in the radio frequency unit. The apparatus has a function of implementing any implementation of the second aspect. The function may be implemented by using hardware, or may be implemented by executing corresponding software by hardware. The hardware or the software includes one or more modules corresponding to the foregoing function.

According to a sixth aspect, an embodiment of this application provides a communication apparatus, including a processor coupled to a memory. The processor is configured to invoke a program stored in the memory, to perform any implementation in the first aspect and the second aspect. The memory may be located inside or outside the apparatus. In addition, there may be one or more processors.

According to a seventh aspect, an embodiment of this application provides a communication apparatus, including a processor and a memory. The memory is configured to store computer instructions. When the apparatus runs, the processor executes the computer instructions stored in the memory, so that the apparatus performs any implementation in the first aspect and the second aspect.

According to an eighth aspect, an embodiment of this application provides a communication apparatus, including a unit or a means (means) configured to perform a step of any implementation in the first aspect and the second aspect.

According to a ninth aspect, an embodiment of this application provides a communication apparatus, including a processor and an interface circuit. The processor is configured to communicate with another apparatus through the interface circuit, and perform any implementation in the first aspect and the second aspect. There are one or more processors.

According to a tenth aspect, an embodiment of this application further provides a chip system, including: a processor, configured to perform any implementation in the first aspect and the second aspect.

According to an eleventh aspect, an embodiment of this application further provides a computer-readable storage medium. The computer-readable storage medium stores a computer program or instructions. When the computer program or instructions are run on a communication apparatus, any implementation in the first aspect and the second aspect is performed.

According to a twelfth aspect, an embodiment of this application further provides a computer program product. The computer program product includes a computer program or instructions. When the computer program or the instructions are run by a communication apparatus, any implementation in the first aspect and the second aspect is performed.

According to a thirteenth aspect, an embodiment of this application further provides a communication system, including a baseband unit configured to perform any implementation of the first aspect, and a radio frequency unit configured to perform any implementation of the second aspect.

### BRIEF DESCRIPTION OF DRAWINGS

FIG. 1 is a schematic diagram of a communication system to which an embodiment of this application is applicable;
FIG. 2 is a schematic flowchart of a data transmission method according to an embodiment of this application;
FIG. 3 is a schematic flowchart of a data transmission method according to an embodiment of this application;
FIG. 4 is a schematic diagram of a time-frequency resource occupied by user data according to an embodiment of this application;
FIG. 5 is a schematic diagram of a data transmission process according to an embodiment of this application;
FIG. 6(a) is a schematic diagram of function division according to an embodiment of this application;
FIG. 6(b) is a schematic diagram of function division according to an embodiment of this application;
FIG. 6(c) is a schematic diagram of function division according to an embodiment of this application;
FIG. 6(d) is a schematic diagram of function division according to an embodiment of this application;
FIG. 7 is a schematic diagram of structures of a baseband unit and a radio frequency unit according to an embodiment of this application;
FIG. 8 is a schematic diagram of a communication apparatus according to an embodiment of this application; and
FIG. 9 is a schematic diagram of a communication apparatus according to an embodiment of this application.

### DESCRIPTION OF EMBODIMENTS

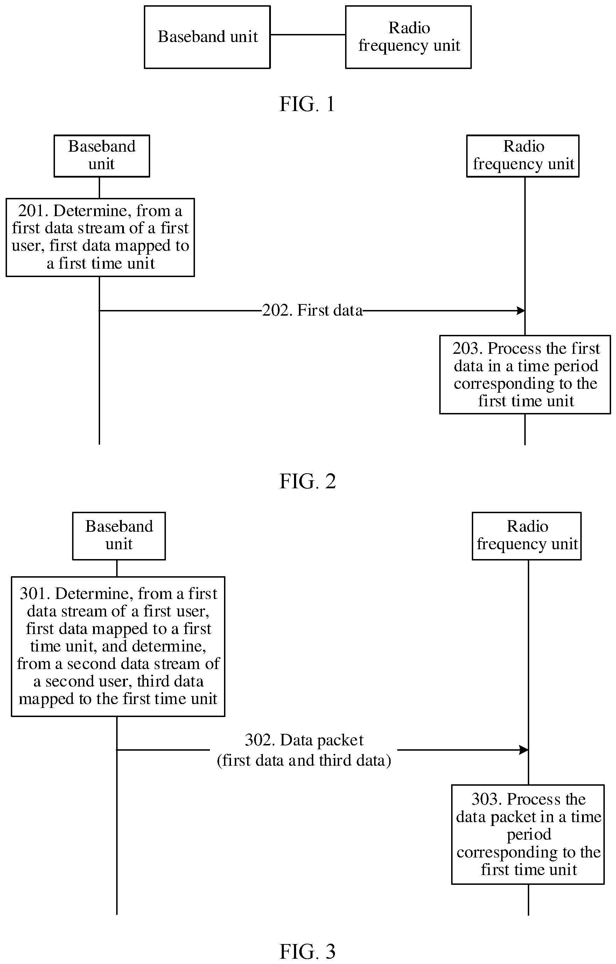

FIG. 1 is a schematic diagram of a communication system to which an embodiment of this application is applicable. The communication system includes a baseband unit (baseband unit, BBU) and a remote unit (radio unit, RU). The baseband unit is a communication device or a functional module having a function of processing a baseband signal. The radio frequency unit is a communication device or a functional module having a function of processing an intermediate frequency signal, a radio frequency signal, or an intermediate radio frequency signal. For example, the radio frequency unit may be a remote radio unit (remote radio unit, RRU), an activeantenna unit (active antenna unit, AAU), or the like. An interface between the baseband unit and the radio frequency unit may be an eCPRI, an Ethernet device common radio interface, or another type of interface. This is not limited in this embodiment of this application.

When the baseband unit communicates with the radio frequency unit through the eCPRI, the baseband unit may also be referred to as a radio equipment controller in an eCPRI scenario (eCPRI radio equipment controller, eREC). The radio frequency unit may also be referred to as a radio equipment in the eCPRI scenario (eCPRI radio equipment, eRE). The eREC and eRE can be regarded as two components of a radio base station. The eREC and eRE can be physically separated. The eREC is located in an equipment room on the ground, and the eRE is close to an antenna or contains the antenna. A physical layer function of the radio base station is divided into two parts, which are deployed in the eREC and the eRE respectively. Specifically, the eREC includes a part of the physical layer function and a high layer function of an air interface, where the high layer includes, for example, a medium access control (medium access control, MAC) layer, a radio link control (radio link control, RLC) layer, a packet data convergence protocol (packet data convergence protocol, PDCP) layer, a radio resource control (radio resource control, RRC) layer, and the like. The eRE includes a part of the physical layer function and an analog radio frequency function.

FIG. 2 is a schematic flowchart of a data transmission method according to an embodiment of this application. The method includes the following steps.

Step 201. A baseband unit determines, from a first data stream of a first user, first data mapped to a first time unit.

For the baseband unit, refer to descriptions of the system shown in FIG. 1.

The first data is a part of data in the first data stream. The first data stream includes user plane data and/or control plane data of one or more services of the first user. Data of the first data stream may be mapped to one slot.

A quantity of symbols (symbols) included in the first time unit is less than a quantity of symbols included in one slot (slot). For example, a quantity of symbols included in one slot may be 14, and the first time unit includes one symbol, two symbols, and the like. Optionally, the first time unit is a mini-slot (mini-slot), and one mini-slot may include six or seven symbols.

In this embodiment of this application, the symbol is also referred to as a time domain symbol, and may be specifically an orthogonal frequency division multiplexing (orthogonal frequency division multiplexing, OFDM) symbol, a discrete Fourier transform-spread-OFDM (Discrete Fourier Transform-spread-OFDM, DFT-s-OFDM) symbol, or another symbol.

In an implementation, the baseband unit determines location information of the first data in the first data stream based on a modulation scheme of the first data stream and a quantity of resource elements (resource elements, REs) occupied by the first data stream in the first time unit, and the baseband unit determines the first data from the first data stream based on the location information. The location information herein may include a start location and a length, or may include a start location and an end location. For example, the baseband unit determines a quantity of bits based on the modulation scheme. For example, a quantity of bits corresponding to the modulation scheme of quadrature phase shift keying (Quadrature Phase Shift Keying, QPSK) is two, a quantity of bits corresponding to QAM 16 is four, and a quantity of bits corresponding to QAM 64 is six. QAM is short for quadrature amplitude modulation (Quadrature Amplitude Modulation). Then, the baseband unit determines, based on the quantity of bits and the quantity of REs occupied by the first data stream in the first time unit, a quantity of bits included in the first data. Specifically, the quantity of bits included in the first data = the quantity of bits × the quantity of REs occupied by the first data stream in the first time unit. Then, the baseband unit determines the start location of the first data in the first data stream based on a location of the first time unit in one slot. For example, when the modulation scheme is the QPSK, the first time unit is a time domain resource occupied by a symbol 0, and the quantity of REs occupied by the first data stream in the first time unit is 120, the baseband unit determines that the quantity of bits included in the first data = 120 × 2 = 240 bits, and the start location of the first data is a start location of the first data stream, in other words, the first data is data of a 1^{st} to a 240^{th} bits of the first data stream. For another example, when the modulation scheme is the QPSK, the first time unit is a time domain resource occupied by a symbol 1, and the quantity of REs occupied by the first data stream in the first time unit is 120, the baseband unit determines that the quantity of bits included in the first data = 120 × 2 = 240 bits, and the start location of the first data is a 241^{st} bit of the first data stream, in other words, the first data is data of the 241^{st} to a 480^{th} bits of the first data stream.

Step 202. The baseband unit sends the first data to a radio frequency unit in a time window corresponding to the first time unit. Correspondingly, the radio frequency unit receives the first data.

The first time unit indicates time at which an antenna sends, on an air interface, the first data that is in the first data stream of the first user and that is mapped to the first time unit. The time window corresponding to the first time unit indicates a time range in which the baseband unit sends the first data to the radio frequency unit, in other words, the baseband unit sends the first data to the radio frequency unit in the time range.

In this embodiment of this application, the time window corresponding to the first time unit may also be referred to as a sending time window corresponding to the first time unit, a transmission time window corresponding to the first time unit, or the like.

The baseband unit sends, to the radio frequency unit each time based on a time unit granularity, data mapped to one time unit.

In an implementation, the baseband unit sends the first data to the radio frequency unit in the time window corresponding to the first time unit through an eCPRI between the baseband unit and the radio frequency unit.

Step 203. The radio frequency unit processes the first data in a time period corresponding to the first time unit.

The time period corresponding to the first time unit indicates a time period that occurs after the radio frequency unit receives the first data, and the radio frequency unit performs a processing operation on the first data in the time period. Therefore, the time period corresponding to the first time unit may also be referred to as a time period in which the radio frequency unit processes the first data, or referred to as a data processing time period corresponding to the first time unit, or the like.

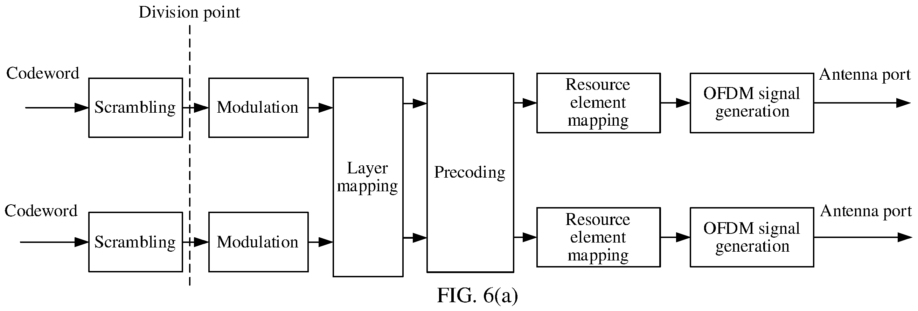

Specifically, for a method for processing the first data, refer to descriptions of FIG. 6(a) to FIG. 6(d).

According to the foregoing solution, when the baseband unit sends user data to the radio frequency unit, a data stream of a user is divided in time domain based on a time unit granularity, and a data volume of a single time unit granularity obtained through division is sent each time, so that a data volume sent at a single time is reduced. When a bit error or a data loss occurs in data sent at a single time, the method can reduce a retransmitted data volume, and improve data transmission efficiency. Optionally, in a same manner, the baseband unit may further send, to the radio frequency unit, second data that is in the first data stream of the first user and that is mapped to a second time unit. The second time unit is later than the first time unit in terms of a time sequence. For a meaning of the second time unit, refer to a meaning of the first time unit. By analogy, data that is in the first data stream of the first user and that is mapped to each time unit may be sequentially sent to the radio frequency unit in a manner of sending a data volume of one time unit granularity each time. In the foregoing solution, when the baseband unit sends user data to the radio frequency unit, data of different users is sent separately, in other words, data sent each time is data that is in a data stream of a single user and that is mapped to a time unit. The following describes another data transmission method. In the method, a baseband unit may transmit, in one data transmission, data that is in data streams of two or more users and that is mapped to a same time unit, in other words, in one data transmission, data of a plurality of users may be sent and the data is mapped to the same time unit. The following provides descriptions by using an example in which data that is in data streams of two users and that is mapped to a same time unit is transmitted in one data transmission.

FIG. 3 is a schematic flowchart of a data transmission method according to an embodiment of this application. The method includes the following steps.

Step 301. A baseband unit determines, from a first data stream of a first user, first data mapped to a first time unit, and determines, from a second data stream of a second user, third data mapped to the first time unit.

For a definition of the first time unit, refer to the foregoing descriptions.

For a method in which the baseband unit determines, from the first data stream, the first data mapped to the first time unit, refer to the foregoing descriptions. A method in which the baseband unit determines, from the second data stream, the third data mapped to the first time unit is similar to the method in which the baseband unit determines, from the first data stream, the first data mapped to the first time unit.

In an implementation, data between different users is mapped to a time-frequency resource in a frequency division multiplexing or a code division multiplexing manner. For example, both the first data and the third data are data of a frequency division multiplexing type or data of a code division multiplexing type. Specifically, frequency division multiplexing or code division multiplexing is performed on the first data and the third data on the time-frequency resource.

Step 302. The baseband unit sends a data packet to a radio frequency unit in a time window corresponding to the first time unit, where the data packet includes the first data and the third data. Correspondingly, the radio frequency unit receives the data packet.

The first time unit indicates time at which an antenna sends the data packet on an air interface. The time window corresponding to the first time unit indicates a time range in which the baseband unit sends the data packet to the radio frequency unit, in other words, the baseband unit sends the data packet to the radio frequency unit in the time range.

The baseband unit sends, to the radio frequency unit each time based on a time unit granularity, data of a plurality of users that is mapped to one time unit.

In an implementation, the baseband unit sends the data packet to the radio frequency unit in the time window corresponding to the first time unit through an eCPRI between the baseband unit and the radio frequency unit.

Step 303. The radio frequency unit processes the data packet in a time period corresponding to the first time unit.

The time period corresponding to the first time unit indicates a time period that occurs after the radio frequency unit receives the data packet, and the radio frequency unit performs a processing operation on the data packet in the time period. Therefore, the time period corresponding to the first time unit may also be referred to as a time period in which the radio frequency unit processes the data packet.

The processing the data packet includes processing the first data and the third data.

Specifically, for a method for processing the data packet, refer to descriptions of FIG. 6(a) to FIG. 6(d). In an implementation, the data packet further includes location information of the first data in the data packet and location information of the third data in the data packet, so that the radio frequency unit obtains the first data from the data packet based on the location information of the first data in the data packet, and obtains the third data from the data packet based on the location information of the third data in the data packet.

In another implementation, when sending the first data and the third data to the radio frequency unit, the baseband unit further sends a control information packet to the radio frequency unit, where the control information packet includes the location information of the first data in the data packet and the location information of the third data in the data packet, so that the radio frequency unit obtains the first data from the data packet based on the location information of the first data in the data packet, and obtains the third data from the data packet based on the location information of the third data in the data packet.

According to the foregoing solution, the baseband unit may transmit data of a plurality of users in a same time unit, to be specific, the baseband unit may map a part of data in data streams of different users to the time unit, and send, in the time unit, the data mapped to the time unit. In one aspect, the radio frequency unit does not need to transmit data of a next user after transmission of all data in a single data stream of a user is completed. Therefore, a case in which data of another user cannot be transmitted for long time due to a large data transmission volume of a user can be avoided, thereby improving user experience. In another aspect, because the baseband unit divides the data stream of the user in time domain based on the time unit granularity, and sends a data volume of one time unit granularity each time, a data volume sent at a single time is reduced. Therefore, when a bit error or a data loss occurs in data sent at a single time, the method can reduce a retransmitted data volume, and improve data transmission efficiency.

Optionally, in a same manner, the baseband unit may further send the data packet to the radio frequency unit, where the data packet includes the second data that is in the first data stream of the first user and that is mapped to a second time unit, and includes fourth data that is in the second data stream of the second user and that is mapped to the second time unit. The second time unit is later than the first time unit in terms of a time sequence. For a meaning of the second time unit, refer to a meaning of the first time unit. By analogy, data that is in the first data stream of the first user and the second data stream of the second user and that is mapped to each time unit may be sequentially sent to the radio frequency unit in a manner of sending a data volume of one time unit granularity each time.

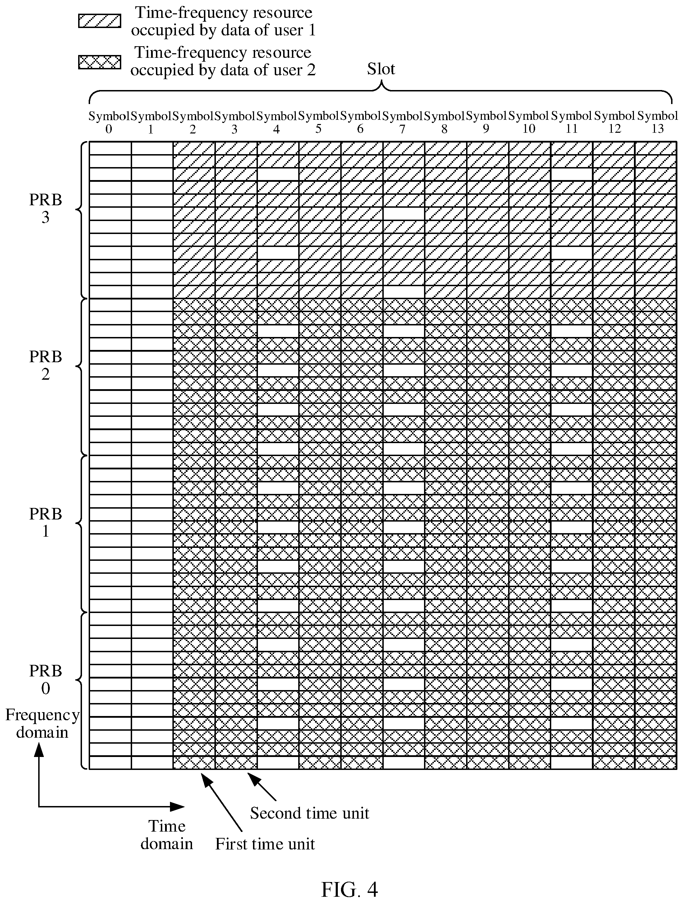

The following describes the foregoing solution with reference to an example. FIG. 4 is a schematic diagram of a time-frequency resource occupied by user data according to an embodiment of this application. A data stream of one user may be mapped to one slot in time domain. One physical resource block (physical resource block, PRB) occupies 14 symbols in time domain and 12 subcarriers in frequency domain. One resource element (RE) occupies one symbol in time domain and one subcarrier in frequency domain. A data stream of a user 1 occupies one PRB, that is, a PRB 3, and a data stream of a user 2 occupies three PRBs, that is, a PRB 0, a PRB 1, and a PRB 2. One PRB includes an RE that carries user data and an RE that carries control information of a user. In an implementation, as shown in FIG. 4, the RE that carries the control information of the user may be one or more REs other than the RE that carries the user data.

For the embodiment described in FIG. 2, that the first user is the user 1 in FIG. 4, and the first time unit and the second time unit each include one symbol is used as an example. For example, the first time unit is a time period represented by a symbol 3, and a baseband unit obtains, from the data stream of the user 1, data 1 mapped to the symbol 3, and then sends the data 1 to a radio frequency unit. For example, the second time unit is a time period represented by a symbol 4, and the baseband unit obtains, from the data stream of the user 1, data 2 mapped to the symbol 4, and then sends the data 2 to the radio frequency unit. By analogy, the baseband unit sends a data volume at a symbol granularity to the radio frequency unit each time, instead of sending all data in the data stream of the user 1, so that a data volume sent at a single time is reduced. When a bit error or a data loss occurs in data sent at a single time, the method can reduce a retransmitted data volume, and improve data transmission efficiency. The data stream of the user 2 may also be sent according to a similar method.

For the embodiment corresponding to FIG. 3, that the first user is the user 1 in FIG. 4, the second user is the user 2 in FIG. 4, and the first time unit and the second time unit each include one symbol is used as an example. For example, the first time unit is the time period represented by the symbol 3. The baseband unit obtains, from the data stream of the user 1, data mapped to the symbol 3, obtains, from the data stream of the user 2, data mapped to the symbol 3, and then sends a data packet to the radio frequency unit. The data packet includes the data mapped to the symbol 3 in the data stream of the user 1 and the data mapped to the symbol 3 in the data stream of the user 2. For example, the second time unit is the time period represented by the symbol 4. The baseband unit obtains, from the data stream of the user 1, data mapped to the symbol 4, obtains, from the data stream of the user 2, data mapped to the symbol 4, and then sends a data packet to the radio frequency unit. The data packet includes the data mapped to the symbol 4 in the data stream of the user 1 and the data mapped to the symbol 4 in the data stream of the user 2. By analogy, the baseband unit sends the data volume at the symbol granularity to the radio frequency unit each time, instead of sending all data in the data stream of the user 1 or all data in the data stream of the user 2 each time. According to this solution, the baseband unit may transmit data of a plurality of users in a same symbol, to be specific, the baseband unit may map a part of data in data streams of different users to the symbol, and send, on the symbol, the data mapped to the symbol. In one aspect, the radio frequency unit does not need to transmit data of a next user after transmission of all data in a single data stream of a user is completed. Therefore, a case in which data of another user cannot be transmitted for long time due to a large data transmission volume of a user can be avoided, thereby improving user experience. In another aspect, because the baseband unit divides the data stream of the user in time domain based on the symbol granularity, and sends a data volume of one symbol granularity each time, a data volume sent at a single time is reduced. Therefore, when a bit error or a data loss occurs in data sent at a single time, the method can reduce a retransmitted data volume, and improve data transmission efficiency. The following describes a specific implementation for the baseband unit to send the user data to the radio frequency unit in the foregoing embodiment.

In an implementation, the foregoing step 202 is specifically: The baseband unit determines the time window corresponding to the first time unit, and the baseband unit sends the first data to the radio frequency unit in the time window corresponding to the first time unit. For example, the baseband unit determines, based on the first time unit, a delay of processing the first data by the radio frequency unit, and a transmission delay of the first data between the baseband unit and the radio frequency unit, the time window corresponding to the first time unit. The first time unit indicates time at which the antenna sends, on an air interface, the first data that is in the first data stream of the first user and that is mapped to the first time unit. The time window is a time period before the first time unit, and the baseband unit sends the first data in the time window. The first data is transmitted to the radio frequency unit, processed by the radio frequency unit, and then sent to the antenna. The antenna sends, in the first time unit, the first data processed by the radio frequency unit.

Similarly, in an implementation, the foregoing step 302 is specifically: The baseband unit determines a time window corresponding to the first time unit, and the baseband unit sends, to the radio frequency unit in the time window corresponding to the first time unit, a data packet including the first data and the third data. For example, the baseband unit determines, based on the first time unit, a delay of processing the data packet including the first data and the third data by the radio frequency unit, and a transmission delay of the data packet between the baseband unit and the radio frequency unit, the time window corresponding to the first time unit. The first time unit indicates time at which the antenna sends the data packet on the air interface. The time window is a time period before the first time unit, and the baseband unit sends the data packet in the time window. The data packet is transmitted to the radio frequency unit, processed by the radio frequency unit, and then sent to the antenna. The antenna sends, in the first time unit, the data packet processed by the radio frequency unit.

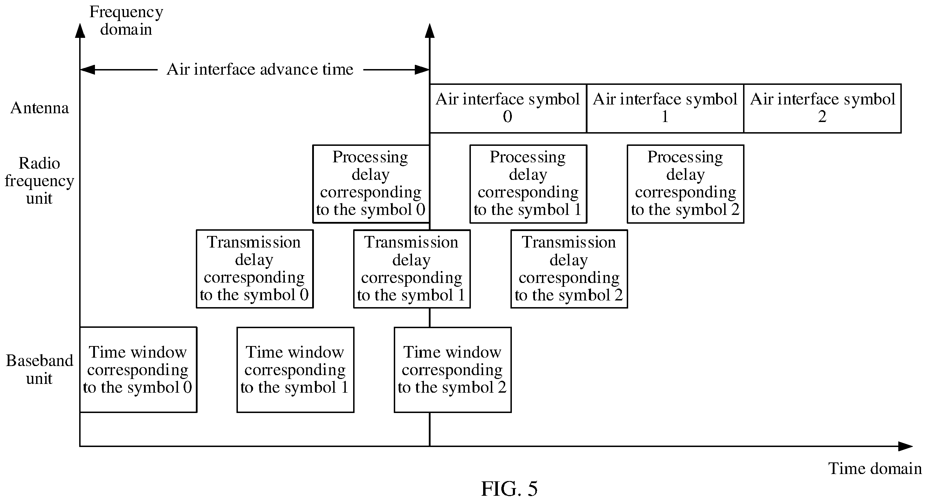

The following provides descriptions with reference to a specific example. FIG. 5 is a schematic diagram of a data transmission process according to an embodiment of this application. A baseband unit performs transmission after dividing data of a user data stream based on a symbol granularity. In other words, the foregoing first time unit and second time unit each are a time period representing one symbol granularity.

For the embodiment corresponding to FIG. 2, that the baseband unit sends the data of the user 1 shown in FIG. 4 to a radio frequency unit is used as an example. The baseband unit determines, based on a symbol 0 (the symbol 0 may be a type of the first time unit) of an antenna on an air interface, a delay of processing, by the radio frequency unit, data that is in a data stream of the user 1 and that is mapped to the symbol 0 (also referred to as a processing delay corresponding to the symbol 0), and a transmission delay, between the baseband unit and the radio frequency unit, of the data that is in the data stream of the user 1 and that is mapped to the symbol 0 (also referred to as a transmission delay corresponding to the symbol 0), a time window corresponding to the data that is in the data stream of the user 1 and that is mapped to the symbol 0 (also referred to as a time window corresponding to the symbol 0). Then, the baseband unit sends, to the radio frequency unit in the time window, the data that is in the data stream of the user 1 and that is mapped to the symbol 0. After receiving the data, the radio frequency unit processes the data. The processing includes one or more of modulation, layer mapping, precoding, resource element mapping, and OFDM signal generation. For details, refer to descriptions of FIG. 6(a) to FIG. 6(d). Then, the radio frequency unit sends processed data to the antenna, and the antenna sends the processed data to a terminal on the symbol 0. Similarly, the antenna sends, on a symbol 1, data that is in a data stream of the user 1 and that is mapped to the symbol 1 to the terminal, sends, on a symbol 2, data that is in the data stream of the user 1 and that is mapped to the symbol 2 to the terminal, and so on.

For the embodiment corresponding to FIG. 3, that the baseband unit sends the data of the user 1 and the data of the user 2 shown in FIG. 4 to the radio frequency unit is used as an example. The baseband unit determines, based on the symbol 0 (the symbol 0 may be a type of the first time unit) of the antenna on the air interface, a delay of processing the data packet by the radio frequency unit (also referred to as a processing delay corresponding to the symbol 0), and a transmission delay of the data packet between the baseband unit and the radio frequency unit (also referred to as a transmission delay corresponding to the symbol 0), a time window corresponding to the data packet (also referred to as a time window corresponding to the symbol 0). Then the baseband unit sends the data packet to the radio frequency unit in the time window, and subsequently, after receiving the data packet, the radio frequency unit processes the data packet. The processing includes one or more of modulation, layer mapping, precoding, resource element mapping, and OFDM signal generation. For details, refer to the descriptions of FIG. 6(a) to FIG. 6(d). Then, the radio frequency unit sends the processed data packet to the antenna, and the antenna sends, on the symbol 0, the processed data packet to the terminal. The data packet includes data that is in the data stream of the user 1 and that is mapped to the symbol 0 and data that is in the data stream of the user 1 and that is mapped to the symbol 0. Similarly, the antenna sends, on the symbol 1, a data packet to the terminal. The data packet includes data that is in the data stream of the user 1 and that is mapped to the symbol 1 and data that is in the data stream of the user 2 and that is mapped to the symbol 1. The antenna sends, on the symbol 2, a data packet to the terminal. The data packet includes data that is in the data stream of the user 1 and that is mapped to the symbol 2, data that is in the data stream of the user 2 and that is mapped to the symbol 2, and the like. In this embodiment of this application, for the foregoing method for data processing by the radio frequency unit, refer to descriptions of a function that the radio frequency unit is responsible in FIG. 6(a) to FIG. 6(d). When the baseband unit communicates with the radio frequency unit through an eCPRI, the baseband unit and the radio frequency unit separately implement a part of functions. Specifically, different division locations indicate different functions of the radio frequency unit, and indicate different methods for data processing by the radio frequency unit by using the functions. The following describes a method of function division between the baseband unit and the radio frequency unit.

FIG. 6(a) is a schematic diagram of function division according to an embodiment of this application. In this example, a baseband unit implements a coding function and a scrambling function in physical layer functions, and a radio frequency unit implements a modulation function, a layer mapping function, a precoding function, a resource element mapping function, and an orthogonal frequency division multiplexing (Orthogonal Frequency Division Multiplexing, OFDM) signal generation function in the physical layer functions. Based on the implementation, the first data stream in step 201 is a scrambled bit data stream, and the baseband unit determines, from the scrambled first data stream, the first data mapped to the first time unit, and then sends the first data to the radio frequency unit. That the radio frequency unit processes the first data in step 203 may specifically be: The radio frequency unit performs modulation, layer mapping, precoding, and resource element mapping on the first data in the time period corresponding to the first time unit, then generates an OFDM signal, and sends the OFDM signal to an antenna. Based on the implementation, the first data stream and the second data stream in step 301 each are a scrambled bit data stream, and the baseband unit determines, from the scrambled first data stream, the first data mapped to the first time unit, determines, from the scrambled second data stream, the third data mapped to the first time unit, and then sends the data packet including the first data and the third data to the radio frequency unit. That the radio frequency unit processes the data packet in step 303 may specifically be: The radio frequency unit performs modulation, layer mapping, precoding, and resource element mapping on the data packet in the time period corresponding to the first time unit, then generates an OFDM signal, and sends the OFDM signal to an antenna.

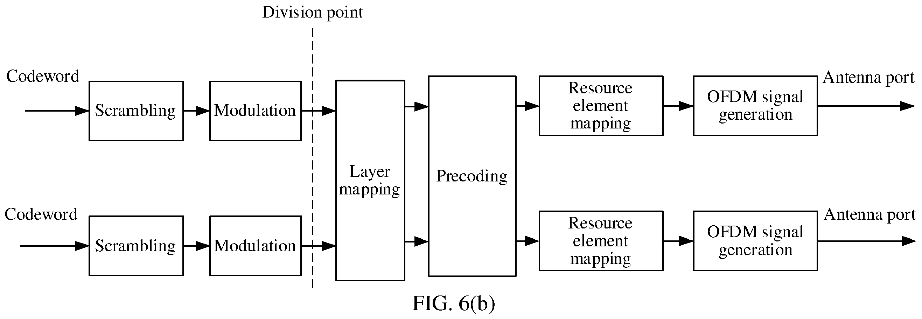

FIG. 6(b) is a schematic diagram of function division according to an embodiment of this application. In this example, a baseband unit implements a coding function, a scrambling function, and a modulation function in physical layer functions, and a radio frequency unit implements a layer mapping function, a precoding function, a resource element mapping function, and an OFDM signal generation function in the physical layer functions. Based on the implementation, the first data stream in step 201 is a scrambled and modulated data stream, and the baseband unit determines, from the scrambled and modulated first data stream, the first data mapped to the first time unit, and then sends the first data to the radio frequency unit. That the radio frequency unit processes the first data in step 203 may specifically be: The radio frequency unit performs layer mapping, precoding, and resource element mapping on the first data in the time period corresponding to the first time unit, then generates an OFDM signal, and sends the OFDM signal to an antenna. Based on the implementation, the first data stream and the second data stream in step 301 each are a scrambled and modulated bit data stream, and the baseband unit determines, from the scrambled and modulated first data stream, the first data mapped to the first time unit, and determines, from the scrambled and modulated second data stream, the third data mapped to the first time unit, and then sends the data packet including the first data and the third data to the radio frequency unit. That the radio frequency unit processes the data packet in step 303 may specifically be: The radio frequency unit performs layer mapping, precoding, and resource element mapping on the data packet in the time period corresponding to the first time unit, then generates an OFDM signal, and sends the OFDM signal to an antenna.

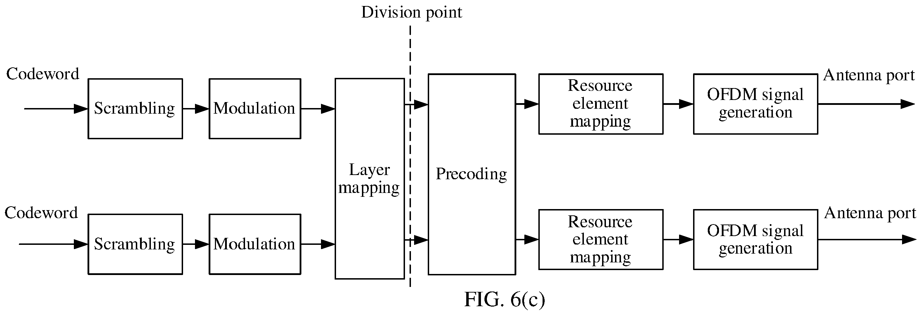

FIG. 6(c) is a schematic diagram of function division according to an embodiment of this application. In this example, a baseband unit implements a coding function, a scrambling function, a modulation function, and a layer mapping function in physical layer functions, and a radio frequency unit implements a precoding function, a resource element mapping function, and an OFDM signal generation function in the physical layer functions. Based on the implementation, the first data stream in step 201 is a data stream on which scrambling, modulation, and layer mapping are performed, and the baseband unit determines, from the first data stream on which scrambling, modulation, and layer mapping are performed, the first data mapped to the first time unit, and then sends the first data to the radio frequency unit. That the radio frequency unit processes the first data in step 203 may specifically be: The radio frequency unit performs precoding and resource element mapping on the first data in the time period corresponding to the first time unit, then generates an OFDM signal, and sends the OFDM signal to an antenna. Based on the implementation, the first data stream and the second data stream in step 301 each are a bit data stream on which scrambling, modulation, and layer mapping are performed, and the baseband unit determines, from the first data stream on which scrambling, modulation, and layer mapping are performed, the first data mapped to the first time unit, determines, from the second data stream on which scrambling, modulation, and layer mapping are performed, the third data mapped to the first time unit, and then sends the data packet including the first data and the third data to the radio frequency unit. That the radio frequency unit processes the data packet in step 303 may specifically be: The radio frequency unit performs precoding and resource element mapping on the data packet in the time period corresponding to the first time unit, then generates an OFDM signal, and sends the OFDM signal to an antenna.

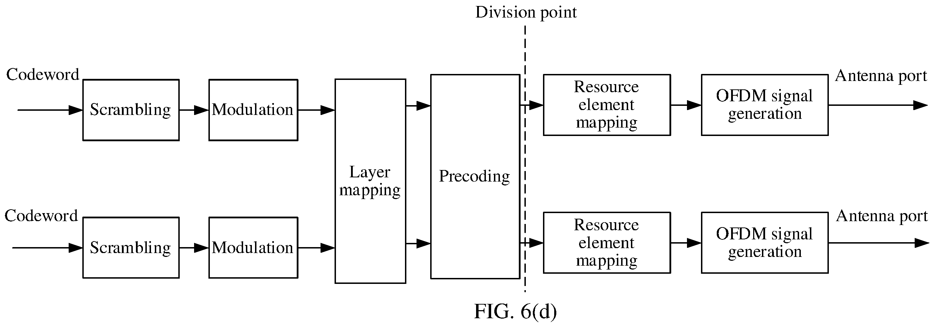

FIG. 6(d) is a schematic diagram of function division according to an embodiment of this application. In this example, a baseband unit implements a coding function, a scrambling function, a modulation function, a layer mapping function, and a precoding function in physical layer functions, and a radio frequency unit implements a resource element mapping function and an OFDM signal generation function in the physical layer functions. Based on the implementation, the first data stream in step 201 is a data stream on which scrambling, modulation, layer mapping, and precoding are performed, and the baseband unit determines, from the first data stream on which scrambling, modulation, layer mapping, and precoding are performed, the first data mapped to the first time unit, and then sends the first data to the radio frequency unit. That the radio frequency unit processes the first data in step 203 may specifically be: The radio frequency unit performs resource element mapping on the first data in the time period corresponding to the first time unit, then generates an OFDM signal, and sends the OFDM signal to an antenna. Based on the implementation, the first data stream and the second data stream in step 301 each are a bit data stream on which scrambling, modulation, and layer mapping are performed, and the baseband unit determines, from the first data stream on which scrambling, modulation, layer mapping, and precoding are performed, the first data mapped to the first time unit, determines, from the second data stream on which scrambling, modulation, layer mapping, and precoding are performed, the third data mapped to the first time unit, and then sends the data packet including the first data and the third data to the radio frequency unit. That the radio frequency unit processes the data packet in step 303 may specifically be: The radio frequency unit performs resource element mapping on the data packet in the time period corresponding to the first time unit, then generates an OFDM signal, and sends the OFDM signal to an antenna.

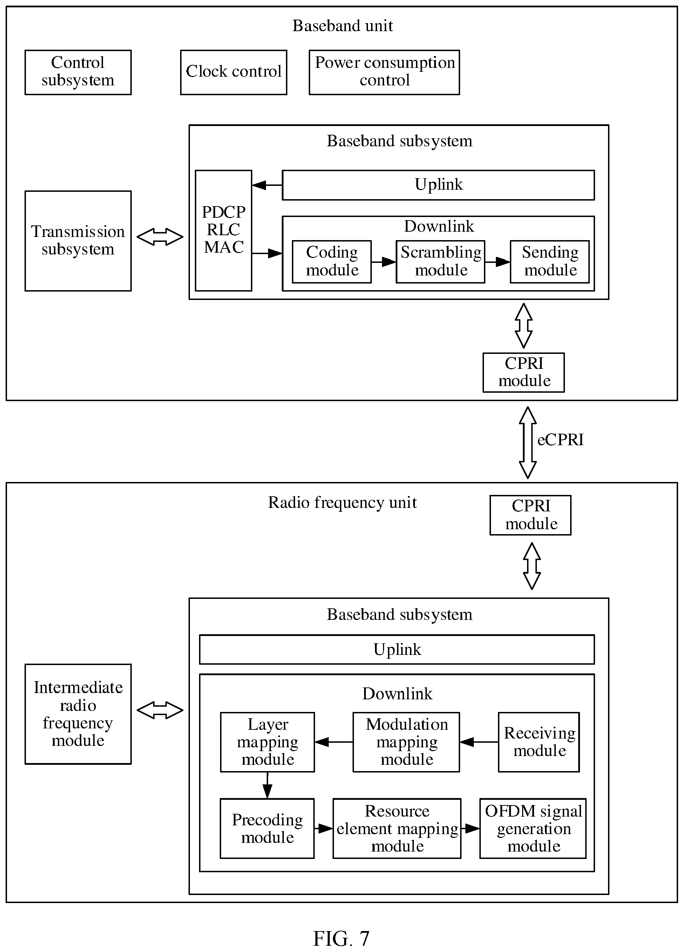

The following describes the foregoing data transmission method provided in embodiments of this application with reference to specific structures of the baseband unit and the radio frequency unit. FIG. 7 is a schematic diagram of structures of a baseband unit and a radio frequency unit according to an embodiment of this application. In this example, the embodiment corresponding to FIG. 2 or FIG. 3 may be implemented by using a sending module in a baseband subsystem of the baseband unit, a CPRI module of the baseband unit, a CPRI module of the radio frequency unit, and a receiving module in a baseband subsystem of the radio frequency unit. It should be noted that, for the baseband unit and the radio frequency unit shown in FIG. 7, physical layer functions are divided according to a physical layer function division manner shown in FIG. 6(a).

For the method embodiment shown in FIG. 2, for example, the sending module of the baseband unit performs the foregoing step 201, and then sends the first data to the CPRI module of the baseband unit, and the CPRI module of the baseband unit sends the first data to the CPRI module of the radio frequency unit. The CPRI module of the radio frequency unit sends the first data to the receiving module of the radio frequency unit, and then the receiving module of the radio frequency unit processes the first data.

For the method embodiment shown in FIG. 3, for example, the sending module of the baseband unit performs the foregoing step 301, and then sends the data packet to the CPRI module of the baseband unit, where the data packet includes the first data and the third data, and the CPRI module of the baseband unit sends the data packet to the CPRI module of the radio frequency unit. The CPRI module of the radio frequency unit sends the data packet to the receiving module of the radio frequency unit, and then the receiving module of the radio frequency unit processes the data packet.

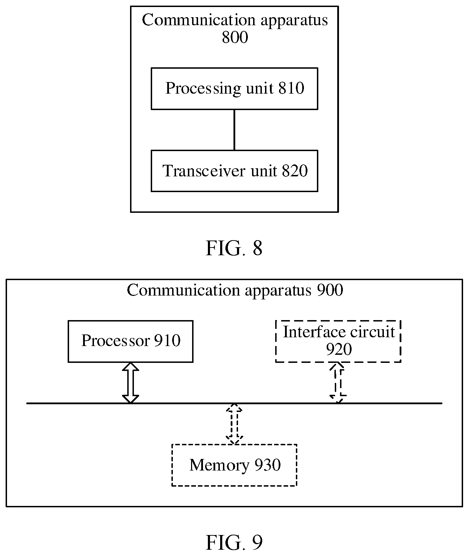

It may be understood that, to implement the functions in the foregoing embodiments, the baseband unit or the radio frequency unit includes a corresponding hardware structure and/or software module for performing each function. A person skilled in the art should be easily aware that, based on units and the method steps in the examples described in embodiments disclosed in this application, this application can be implemented through hardware or a combination of hardware and computer software. Whether a function is performed through hardware or hardware driven by computer software depends on a particular application scenario and a design constraint condition of a technical solution. FIG. 8 and FIG. 9 each are a schematic diagram of a structure of a possible communication apparatus according to an embodiment of this application. These communication apparatuses may be configured to implement a function of the baseband unit or the radio frequency unit in the foregoing method embodiments, and therefore can also achieve beneficial effects of the foregoing method embodiments. In this embodiment of this application, the communication apparatus may be a baseband unit or a radio frequency unit, or may be a module (such as a chip) used in the baseband unit or the radio frequency unit.

As shown in FIG. 8, a communication apparatus 800 includes a processing unit 810 and a transceiver unit 820. The communication apparatus 800 is configured to implement the function of the baseband unit or the radio frequency unit in the foregoing method embodiments.

When the communication apparatus 800 is configured to perform an operation of the baseband unit in the embodiment in FIG. 2 or FIG. 3, the processing unit 810 is configured to determine, from a first data stream of a first user, first data mapped to a first time unit, where the first data is a part of data in the first data stream, a quantity of symbols included in the first time unit is less than a quantity of symbols included in one slot; and the transceiver unit 820 is configured to send the first data to the radio frequency unit in a time window corresponding to the first time unit.

In a possible implementation, the processing unit 810 is specifically configured to determine location information of the first data in the first data stream based on a modulation scheme of the first data stream and a quantity of resource elements occupied by the first data stream in the first time unit; and determine the first data from the first data stream based on the location information.

In a possible implementation, the processing unit 810 is further configured to: before the transceiver unit 820 sends the first data to the radio frequency unit, determine the time window corresponding to the first time unit.

In a possible implementation, the processing unit 810 is specifically configured to determine the time window based on the first time unit, a delay of processing the first data by the radio frequency unit, and a transmission delay of the first data between the baseband unit and the radio frequency unit.

In a possible implementation, the transceiver unit 820 is specifically configured to send the first data to the radio frequency unit in the time window corresponding to the first time unit through an eCPRI between the baseband unit and the radio frequency unit.

In a possible implementation, the first data stream is a scrambled bit data stream or a modulated data stream.

In a possible implementation, the processing unit 810 is further configured to determine, from the first data stream, second data mapped to a second time unit, where the first time unit is earlier than the second time unit, a quantity of symbols included in the second time unit is less than the quantity of symbols included in one slot, and the first data and the second data are data at different locations in the first data stream; and the transceiver unit 820 is further configured to send the second data to the radio frequency unit in a time window corresponding to the second time unit.

In a possible implementation, the processing unit 810 is further configured to determine, from a second data stream of a second user, third data mapped to the first time unit, where the third data is a part of data in the second data stream; and the transceiver unit 820 is specifically configured to send a data packet to the radio frequency unit in the time window corresponding to the first time unit, where the data packet includes the first data and the third data.

In a possible implementation, the data packet further includes location information of the first data in the data packet and location information of the third data in the data packet.

In a possible implementation, the transceiver unit 820 is further configured to send a control information packet to the radio frequency unit, where the control information packet includes the location information of the first data in the data packet and the location information of the third data in the data packet.

In a possible implementation, the first data is data of a frequency division multiplexing type or data of a code division multiplexing type.

In a possible implementation, the second data is data of a frequency division multiplexing type or data of a code division multiplexing type.

In a possible implementation, the third data is data of a frequency division multiplexing type or data of a code division multiplexing type.

When the communication apparatus 800 is configured to perform an operation of the radio frequency unit in the embodiment in FIG. 2 or FIG. 3, the transceiver unit 820 is configured to receive the first data from the baseband unit, where the first data is a part of data in the first data stream of the first user, the first data is mapped to the first time unit, and the quantity of symbols included in the first time unit is less than the quantity of symbols included in one slot; and the processing unit 810 is configured to process the first data in a time period corresponding to the first time unit.

In a possible implementation, the transceiver unit 820 is further configured to receive the second data from the baseband unit, where the first data and the second data are data at different locations in the first data stream, the second data is mapped to the second time unit, the first time unit is earlier than the second time unit, and the quantity of symbols included in the second time unit is less than the quantity of symbols included in one slot; and the processing unit 810 is further configured to process the second data in a time period corresponding to the second time unit.

In a possible implementation, the transceiver unit 820 is specifically configured to receive the data packet from the baseband unit, where the data packet includes the first data and third data, the third data is a part of data in the second data stream of the second user, and the third data is mapped to the first time unit.

In a possible implementation, the data packet further includes location information of the first data in the data packet and location information of the third data in the data packet.

In a possible implementation, the transceiver unit 820 is further configured to receive the control information packet from the baseband unit, where the control information packet includes the location information of the first data in the data packet and the location information of the third data in the data packet.

In a possible implementation, the processing unit 810 is further configured to obtain the first data from the data packet based on the location information of the first data in the data packet; and obtain the third data from the data packet based on the location information of the third data in the data packet.

In a possible implementation, the first data is data of a frequency division multiplexing type or data of a code division multiplexing type.

In a possible implementation, the second data is data of a frequency division multiplexing type or data of a code division multiplexing type.

In a possible implementation, the third data is data of a frequency division multiplexing type or data of a code division multiplexing type.

In a possible implementation, the transceiver unit 820 is specifically configured to receive the first data from the baseband unit through the eCPRI between the baseband unit and the radio frequency unit.

In a possible implementation, the first data stream is a scrambled bit data stream. The processing unit 810 is specifically configured to perform modulation, layer mapping, precoding, and resource element mapping on the first data in the time period corresponding to the first time unit.

In a possible implementation, the first data stream is a modulated data stream. The processing unit 810 is specifically configured to perform layer mapping, precoding, and resource element mapping on the first data in the time period corresponding to the first time unit; or perform precoding and resource element mapping on the first data in the time period corresponding to the first time unit; or perform resource element mapping on the first data in the time period corresponding to the first time unit.

For more detailed descriptions of the processing unit 810 and the transceiver unit 820, refer directly to related descriptions in the foregoing method embodiments. Details are not described herein again. As shown in FIG. 9, a communication apparatus 900 includes one or more processors 910. Optionally, the communication apparatus 900 further includes an interface circuit 920. The processor 910 and the interface circuit 920 are coupled to each other. It may be understood that the interface circuit 920 may be a transceiver or an input/output interface. Optionally, the communication apparatus 900 may further include a memory 930, configured to store instructions executed by the processor 910, or store input data needed by the processor 910 to run the instructions, or store data generated after the processor 910 runs the instructions.

When the communication apparatus 900 is configured to implement the method embodiment in FIG. 2 or FIG. 3, the processor 910 is configured to implement a function of the processing unit 810, and the interface circuit 920 is configured to implement a function of the transceiver unit 820.

The processor in this embodiment of this application may include a central processing unit, a general-purpose processor, a digital signal processor (digital signal processor, DSP), an application-specific integrated circuit (application-specific integrated circuit, ASIC), a field programmable gate array (field programmable gate array, FPGA) or another programmable logic device, a transistor logic device, a hardware component, or any combination thereof. The general-purpose processor may be a microprocessor, or may be any conventional processor.

In an optional implementation, the processor in this embodiment of this application may include a baseband processor and a central processing unit. The baseband processor is mainly configured to process a communication protocol and communication data. The central processing unit is mainly configured to control the entire communication apparatus, execute a software program, and process data of the software program. The processor in FIG. 9 integrates functions of the baseband processor and the central processing unit. A person skilled in the art may understand that the baseband processor and the central processing unit may alternatively be processors independent of each other, and are interconnected by using a technology such as a bus. A person skilled in the art may understand that the communication apparatus may include a plurality of baseband processors to adapt to different network standards, the communication apparatus may include a plurality of central processing units to enhance a processing capability of the communication apparatus, and components of the communication apparatus may be connected by using various buses. The baseband processor may also be represented as a baseband processing circuit or a baseband processing chip. The central processing unit may also be represented as a central processing circuit or a central processing chip. A function of processing the communication protocol and the communication data may be built in the processor, or may be stored in the memory in a form of a software program, and the processor executes the software program to implement a baseband processing function.

When the foregoing communication apparatus is a chip used in a radio frequency unit, the chip of the radio frequency unit implements a function of the radio frequency unit in the foregoing method embodiments. The chip of the radio frequency unit receives information from another module in the radio frequency unit, where the information comes from a baseband unit; or the chip of the radio frequency unit sends information to another module in the radio frequency unit, where the information needs to be sent to a baseband unit.

When the foregoing communication apparatus is a chip used in the baseband unit, the chip of the baseband unit implements a function of the baseband unit in the foregoing method embodiments. The chip of the baseband unit receives information from another module in the baseband unit, where the information comes from the radio frequency unit; or the chip of the baseband unit sends information to another module in the baseband unit, where the information needs to be sent to the radio frequency unit.

The method steps in embodiments of this application may be implemented through hardware or may be implemented by a processor by executing software instructions. The software instructions may include a corresponding software module, and the software module may be stored in a random access memory, a flash memory, a read-only memory, a programmable read-only memory, an erasable programmable read-only memory, an electrically erasable programmable read-only memory, a register, a hard disk, a removable hard disk, a CD-ROM, or any other form of storage medium well-known in the art. An example storage medium is coupled to a processor, so that the processor can read information from the storage medium or write information into the storage medium. Certainly, the storage medium may be a component of the processor. The processor and the storage medium may be located in an ASIC. In addition, the ASIC may be located in a base station or a terminal. Certainly, the processor and the storage medium may alternatively exist in a base station or a terminal as discrete components.

All or a part of the foregoing embodiments may be implemented through software, hardware, firmware, or any combination thereof. When the software is used to implement embodiments, all or a part of embodiments may be implemented in a form of a computer program product. The computer program product includes one or more computer programs or instructions. When the computer programs or instructions are loaded and executed on a computer, all or a part of procedures or functions in embodiments of this application are performed. The computer may be a general-purpose computer, a dedicated computer, a computer network, a base station, user equipment, or another programmable apparatus. The computer programs or instructions may be stored in a computer-readable storage medium, or may be transmitted from a computer-readable storage medium to another computer-readable storage medium. For example, the computer programs or instructions may be transmitted from a website, a computer, a server, or a data center to another website, computer, server, or data center in a wired or wireless manner. The computer-readable storage medium may be any usable medium accessible by a computer, or a data storage device, such as a server or a data center, integrating one or more usable media. The usable medium may be a magnetic medium, for example, a floppy disk, a hard disk, or a magnetic tape; or may be an optical medium, for example, a digital video disc; or may be a semiconductor medium, for example, a solid-state drive. The computer-readable storage medium may be a volatile or non-volatile storage medium, or may include two types of storage media: volatile and non-volatile.

In various embodiments of this application, unless otherwise stated or there is a logic conflict, terms and/or descriptions in different embodiments are consistent and may be mutually referenced, and technical features in different embodiments may be combined based on an internal logical relationship thereof, to form a new embodiment.

In this application, "at least one" means one or more, and "a plurality of" means two or more. The term "and/or" is an association relationship for describing associated objects and represents that three relationships may exist. For example, A and/or B may represent the following three cases: Only A exists, both A and B exist, and only B exists, where A and B may be singular or plural. In text descriptions of this application, the character "/" generally represents that the associated objects are in an "or" relationship. In a formula of this application, the character "/" represents that associated objects are in a "division" relationship.

It may be understood that numerical numbers in embodiments of this application are differentiated merely for ease of description, but are not used to limit the scope of embodiments of this application. The sequence numbers of the foregoing processes do not mean execution sequences. The execution sequences of the processes should be determined based on functions and internal logic of the processes.

## Claims

1. A data transmission method, comprising:
determining, by a baseband unit from a first data stream of a first user, first data mapped to a first time unit, wherein the first data is a part of data in the first data stream, and a quantity of symbols comprised in the first time unit is less than a quantity of symbols comprised in one slot; and
sending, by the baseband unit, the first data to a radio frequency unit in a time window corresponding to the first time unit.

2. The method according to claim 1, wherein the determining, by a baseband unit from a first data stream of a first user, first data mapped to a first time unit comprises:
determining, by the baseband unit, location information of the first data in the first data stream based on a modulation scheme of the first data stream and a quantity of resource elements occupied by the first data stream in the first time unit; and
determining, by the baseband unit, the first data from the first data stream based on the location information.

3. The method according to claim 1 or 2, wherein the method further comprises:
determining, by the baseband unit, the time window corresponding to the first time unit.

4. The method according to claim 3, wherein the determining, by the baseband unit, the time window corresponding to the first time unit comprises:
determining, by the baseband unit, the time window based on the first time unit, a delay of processing the first data by the radio frequency unit, and a transmission delay of the first data between the baseband unit and the radio frequency unit.

5. The method according to any one of claims 1 to 4, wherein the sending, by the baseband unit, the first data to a radio frequency unit in a time window corresponding to the first time unit comprises:
sending, by the baseband unit, the first data to the radio frequency unit in the time window corresponding to the first time unit through an enhanced common public radio interface eCPRI between the baseband unit and the radio frequency unit.

6. The method according to any one of claims 1 to 5, wherein the first data stream is a scrambled bit data stream or a modulated data stream.

7. The method according to any one of claims 1 to 6, wherein the method further comprises:
determining, by the baseband unit from the first data stream, second data mapped to a second time unit, wherein the first time unit is earlier than the second time unit, a quantity of symbols comprised in the second time unit is less than the quantity of symbols comprised in one slot, and the first data and the second data are data at different locations in the first data stream; and
sending, by the baseband unit, the second data to the radio frequency unit in a time window corresponding to the second time unit.

8. The method according to any one of claims 1 to 7, wherein the sending, by the baseband unit, the first data to a radio frequency unit in a time window corresponding to the first time unit comprises:
determining, by the baseband unit from a second data stream of a second user, third data mapped to the first time unit, wherein the third data is a part of data in the second data stream; and
sending, by the baseband unit, a data packet to the radio frequency unit in the time window corresponding to the first time unit, wherein the data packet comprises the first data and the third data.

9. The method according to claim 8, wherein the data packet further comprises location information of the first data in the data packet and location information of the third data in the data packet.

10. The method according to claim 8, wherein the method further comprises:
sending, by the baseband unit, a control information packet to the radio frequency unit, wherein the control information packet comprises the location information of the first data in the data packet and the location information of the third data in the data packet.

11. The method according to any one of claims 1 to 10, wherein the first data is data of a frequency division multiplexing type or data of a code division multiplexing type.

12. A data transmission method, comprising
receiving, by a radio frequency unit, first data from a baseband unit, wherein the first data is a part of data in a first data stream of a first user, the first data is mapped to a first time unit, and a quantity of symbols comprised in the first time unit is less than a quantity of symbols comprised in one slot; and
processing, by the radio frequency unit, the first data in a time period corresponding to the first time unit.

13. The method according to claim 12, wherein the method further comprises:
receiving, by the radio frequency unit, second data from the baseband unit, wherein the first data and the second data are data at different locations in the first data stream, the second data is mapped to a second time unit, a quantity of symbols comprised in the second time unit is less than the quantity of symbols comprised in one slot, and the first time unit is earlier than the second time unit; and
processing, by the radio frequency unit, the second data in a time period corresponding to the second time unit.

14. The method according to claim 12 or 13, wherein the receiving, by a radio frequency unit, first data from a baseband unit comprises:
receiving, by the radio frequency unit, a data packet from the baseband unit, wherein the data packet comprises the first data and third data, the third data is a part of data in a second data stream of a second user, and the third data is mapped to the first time unit.

15. The method according to claim 14, wherein the data packet further comprises location information of the first data in the data packet and location information of the third data in the data packet.

16. The method according to claim 14, wherein the method further comprises:
receiving, by the radio frequency unit, a control information packet from the baseband unit, wherein the control information packet comprises location information of the first data in the data packet and location information of the third data in the data packet.

17. The method according to claim 15 or 16, wherein the method further comprises:
obtaining, by the radio frequency unit, the first data from the data packet based on the location information of the first data in the data packet; and
obtaining, by the radio frequency unit, the third data from the data packet based on the location information of the third data in the data packet.

18. The method according to any one of claims 12 to 17, wherein the first data is data of a frequency division multiplexing type or data of a code division multiplexing type.

19. The method according to any one of claims 12 to 18, wherein the receiving, by a radio frequency unit, first data from a baseband unit comprises:
receiving, by the radio frequency unit, the first data from the baseband unit through an enhanced common public radio interface eCPRIbetween the baseband unit and the radio frequency unit.

20. The method according to any one of claims 12 to 19, wherein the processing, by the radio frequency unit, the first data comprises:
the first data stream is a scrambled bit data stream; and
performing, by the radio frequency unit, modulation, layer mapping, precoding, and resource element mapping on the first data in the time period corresponding to the first time unit.

21. The method according to any one of claims 12 to 19, wherein the processing, by the radio frequency unit, the first data comprises:
the first data stream is a modulated data stream; and
performing, by the radio frequency unit, layer mapping, precoding, and resource element mapping on the first data in the time period corresponding to the first time unit; or
performing, by the radio frequency unit, precoding and resource element mapping on the first data in the time period corresponding to the first time unit; or
performing, by the radio frequency unit, resource element mapping on the first data in the time period corresponding to the first time unit.

22. A communication apparatus, comprising a module configured to perform the method according to any one of claims 1 to 11, or a module configured to perform the method according to any one of claims 12 to 21.

23. A communication apparatus, comprising a processor and an interface circuit, wherein the interface circuit is configured to receive a signal from another communication apparatus other than the communication apparatus and transmit the signal to the processor or send a signal from the processor to another communication apparatus other than the communication apparatus, and by using a logic circuit or executing code instructions, the processor is configured to implement the method according to any one of claims 1 to 11, or configured to implement the method according to any one of claims 12 to 21.

24. A computer program product, comprising a computer program, when the computer program is executed by a communication apparatus, the method according to any one of claims 1 to 21 is implemented.

25. A computer-readable storage medium, wherein the storage medium stores a computer program or instructions, when the computer program or instructions are executed by a communication apparatus, the method according to any one of claims 1 to 21 is implemented.

26. A chip, wherein the chip comprises a processor and an interface circuit, the interface circuit is coupled to the processor, and the processor is configured to run a computer program or instructions, to enable the method according to any one of claims 1 to 21 to be performed.

27. A communication system, comprising a baseband unit and a radio frequency unit, wherein the baseband unit is configured to perform the method according to any one of claims 1 to 11, and the radio frequency unit is configured to perform the method according to any one of claims 12 to 21.
